# EUROPÄISCHE PATENTSCHRIFT

(11) **EP 2 691 256 B1**
(45) Veröffentlichungstag und Bekanntmachung des Hinweises auf die Patenterteilung: **01.11.2017**
(21) Anmeldenummer: 12713894.9
(22) Anmeldetag: 08.03.2012
(51) Int. Cl.: B60M 1/30

(54) **DEHNVERBINDUNGSANORDNUNG ANEINANDERSTOSSENDER STROMSCHIENEN EINER OBERLEITUNGSANLAGE FÜR ELEKTRISCHE TRIEBFAHRZEUGE**
EXPANSION CONNECTION ARRANGEMENT FOR ADJOINING POWER RAILS OF AN OVERHEAD LINE SYSTEM FOR ELECTRIC LOCOMOTIVES
ENSEMBLE JOINT DE DILATATION DE RAILS CONDUCTEURS CONTIGUS D'UN SYSTÈME À LIGNE DE CONTACT AÉRIENNE POUR VÉHICULES AUTOMOTEURS ÉLECTRIQUES

(30) Priorität: 29.03.2011 DE 102011006308
(43) Veröffentlichungstag der Anmeldung: 05.02.2014
(73) Patentinhaber: Siemens Aktiengesellschaft, 80333 München (DE)
(72) Erfinder: HAHN, Gunter, 91353 Hausen (DE)
(86) Internationale Anmeldenummer: PCT/EP2012/054014
(87) Internationale Veröffentlichungsnummer: WO 2012/130582

(56) Entgegenhaltungen:
- CN-A- 101 746 281
- DE-A1- 3 013 111
- DE-A1- 3 306 117

## Beschreibung

Die Erfindung betrifft eine Dehnverbindungsanordnung aneinanderstoßender Stromschienen einer Oberleitungsanlage für elektrische Triebfahrzeuge.

Die Energieeinspeisung in elektrische Triebfahrzeuge erfolgt im Nah- und Fernbahnverkehr überwiegend über Oberleitungsanlagen, bei welchen ein unter Speisespannung setzbarer Fahrdraht über einer das Triebfahrzeug führenden Gleisanlage gehalten wird. Als Tragwerk für den Fahrdraht dienen neben Kettenwerken auch Stromschienen, wobei letztere weitgehend starr ausgebildet sind und damit eine hohe Biegesteifigkeit aufweisen. Ein Vorteil von Stromschienen-Oberleitungsanlagen ist deren geringe Bauhöhe, weshalb sie vor allem zur Traktionsversorgung bei beengten Raumverhältnissen eingesetzt werden - vor allem in Tunneln, unter Brücken sowie auf Hubbrücken und in Wartungshallen. Stromschienen sind aus einer Vielzahl an aneinanderstoßenden Stromschienenelementen zusammengesetzt, die nachfolgend der Einfachheit halber auch als Stromschienen bezeichnet werden.

Eine Stromschienen-Oberleitungsanlage für elektrische Bahnen ist beispielsweise aus der EP 2 255 991 A2 bekannt. Dort weist eine Stromschiene einen horizontalen Grundträger auf, von dem zwei Spannarme vertikal nach unten ausgehen. An den freien Enden der Spannarme ist je ein Klemmarm angeformt, die zur Aufnahme des Fahrdrahtes zangenartig in je eine Längskerbe des Fahrdrahtes eingreifen. Die beiden Spannarme weisen an ihrer nach außen gerichteten, dem jeweils anderen Spannarm abgewandten Seite vier Längsstege auf, die in Richtung des Fahrdrahtes verlaufen. Zur Verbindung der Stromschiene mit einer sich an diese anschließenden baugleichen Stromschiene, sind von außen an die Spannarme zwei die Stoßnaht überbrückende Klemmlaschen aufgesetzt, die je vier den Längsstegen zugeordnete Längsrillen aufweisen. Zur Befestigung der Stoßlaschen sind an den nach innen gerichteten, den jeweils anderen Spannarm zugewandten Seite je eine Klemmplatte angeordnet, in die jeweils mehrere die Klemmlaschen und die Spannarme durchsetzenden Senkkopfschrauben eingreifen.

Bedingt durch wechselnde Umgebungstemperaturen und die sich ändernde Stromwärme, geht bei der Oberleitungsanlage mit der Temperaturänderung der Stromschienen eine Längenänderung einher. Daher kann nur eine begrenzte Anzahl an Stromschienen ohne Dehnungsausgleich aneinandergefügt werden. Nach definierten Längenabschnitten müssen aneinanderstoßende Stromschienen derart mittels einer Dehnverbindungsanordnung gekoppelt werden, dass ein Längenausgleich der Stromschienen möglich ist, aber ein Stromabnehmer eines die Stoßstelle passierenden Triebfahrzeugs stets Schleifkontakt zu einem stromführenden Fahrdraht hat.

Aus der WO 2010/136224 A2 ist es daher bekannt, zwei Deckenstromschienen an einer Stoßstelle nicht direkt aneinander zu fügen, sondern diese in einem Überlappungsbereich parallel zueinander zu führen und auslaufen zu lassen, damit sie sich über ihre freien Enden ausdehnen und zusammenziehen können. Ein Stromabnehmer gelangt im Überlappungsbereich vom Fahrdraht der einen Stromschiene auf den der anderen. Die Stromschienen sind über Verbindungseinrichtungen miteinander verbunden, die die Stromschienen in Fahrdrahtrichtung verschiebbar auf einem gleichen Niveau über der Schienenkopfberührenden halten. Dadurch wird die folgende Stromschiene angehoben, wenn sich ein Triebfahrzeug mit seinem Stromabnehmer von der vorangehenden Stromschiene her nähert, so dass ein problemloser Übergang gewährleistet ist. Die beiden Stromschienen sind über Leitungen elektrisch miteinander verbunden.

Eine weitere Verbindungsanordnung für Stromschienen ist in der CN 101746281 A beschrieben, bei der die Enden zweier Stromschienen in einem Verbindungselement aufgenommen sind.

Das Verbindungselement weist zwei zueinander bewegliche Aufnahmestücke auf, in denen die Enden der Stromschienen jeweils befestigt sind. Im Übergangsbereich zwischen den Aufnahmestücken ist ein zusätzlicher Fahrdraht angeordnet, der einen Stromabnehmer beim Passieren des Übergangsbereichs führt.

Der Erfindung liegt die Aufgabe zugrunde, eine Dehnverbindungsanordnung der eingangs genannten Art mit verbesserten Eigenschaften bereitzustellen.

Die Aufgabe wird nach der Erfindung gelöst durch eine gattungsgemäße Dehnverbindungsanordnung mit den in Patentanspruch 1 angegebenen Merkmalen. Demnach ist mit der einen Stromschiene ein Verbindungsprofil und mit der anderen Stromschiene ein Gegenprofil verbunden, wobei das Verbindungsprofil und das Gegenprofil derart formschlüssig ineinandergreifen, dass sie in Richtung des Fahrdrahtes gegeneinander verschiebbar und quer dazu arretiert sind. Außerdem ist jede der Stromschienen jeweils mit einer dieser zugeordneten Halbschiene verbunden, welche die Fahrdrähte zwischen den Stromschienen mit dem Verbindungsprofil bzw. dem Gegenprofil tragen und auf einer Überlappungslänge parallel in einem definierten Fahrdrahtabstand zueinander halten. Durch die länglichen Verbindungs- und Gegenprofile können große Stoßabstände zwischen den aneinanderstoßenden Stromschienen überbrückt und damit große Dehnungslängen ausgeglichen werden. Indem zwischen den Stromschienen nur eines der Profile zusammen mit einer Halbschiene verlaufen, weist die Dehnverbindungsanordnung ein geringes Gewicht auf. Die formschlüssige Gleitverbindung von Verbindungs- und Gegenprofil ermöglicht eine hohe Verbindungsstabilität in Querrichtung bei guten Führungseigenschaften in Längsrichtung. Mit Vorteil kann die Halbschiene als hälftiger Teil einer vollen Stromschiene ausgebildet sein. Neben den fertigungstechnischen Vorzügen können in vorteilhafter Weise durch Anformung eines Klemmansatzes an den Profilen die Fahrdrähte zwischen den Enden der Stromschienen auf die gleiche Art gehalten werden, wie durch die Stromschienen selbst. Durch die Ausgestaltung von Verbindungs- und Gegenprofil als schmale Hohlprofile kann dabei ein geringer Fahrdrahtabstand auf der Überlappungslänge verwirklicht werden, wodurch gute Befahreigenschaften der erfindungsgemäßen Dehnverbindungsanordnung infolge geringer Schwingungseinträge durch einen Stromabnehmer mit wenig Lichtbogenausbildungen erzielt werden.

In einer vorteilhaften Ausführungsform der erfindungsgemäßen Anordnung weist das Verbindungsprofil eine winkelförmige Ausnehmung und das Gegenprofil eine winkelförmige, in die Ausnehmung eingreifende Anformung auf. Hierdurch sind Verbindungs- und Gegenprofil ineinander verhakt; dieser laterale Formschluss kann bei Montage durch Ineinanderschieben der Profile hergestellt werden und bleibt im Betrieb sicher verbunden. Die Profile weisen beispielsweise eine gemeinsame Anlagefläche auf, wobei im Querschnitt des Gegenprofils eine L-förmige Winkelanformung sich im Eingriff mit einer L-förmigen Winkelausnehmung des Verbindungsprofils befindet. Die Verbindung gewährleistet eine relative Verschiebbarkeit der Profile, um eine Dilatation bzw. Kontraktion der Stromschienen in Fahrdrahtrichtung zu ermöglichen.

In einer bevorzugten Ausgestaltung der erfindungsgemäßen Anordnung steht das Gegenprofil mit dem Verbindungsprofil und mit der damit verbundenen Halbschiene über Gleitelemente in Gleitkontakt. Die Gleitelemente können einen Befestigungsschaft aufweisen, an dem ein Rundkopf angeformt ist. Mit dem Befestigungsschaft kann ein Gleitelement in eine Bohrung an einem Profil bzw. einer Halbschiene gepresst oder geschraubt sein. Der aus der Bohrung ragende Rundkopf dient als Distanzelement, um zwischen den sich bewegenden Teilen eine konstante Spaltdicke zu halten und um eine glatte Auflagefläche für das gegenüberliegende Teil zu schaffen. Indem die Gleitelemente aus einem selbstschmierenden Material gefertigt sind, ist eine reibungsarme, geführte Relativbewegung gewährleistet.

In einer bevorzugten Ausführungsform der erfindungsgemäßen Anordnung weist das Gegenprofil einen Tragarm auf, der einen Grundsteg der dem Verbindungsprofil zugeordneten Halbschiene drehfest umgreift. Der Tragarm dient daher zum Einen einer zusätzlichen Sicherung der formschlüssigen Verbindung der Profile und zum Anderen wird die Biegesteifigkeit des Gegenprofils und damit der Dehnverbindungsanordnung zwischen den Stromschienen erhöht.

Vorzugsweise weist der Tragarm der erfindungsgemäßen Anordnung einen Durchbruch auf, durch den wenigstens ein mit dem Gegenprofil elektrisch leitend verbundenes Schleifstück die mit dem Verbindungsprofil elektrisch leitend verbundene Halbschiene elektrisch kontaktiert. Durch ein oder mehrere Schleifstücke wird eine sichere Stromübertragung zwischen den Stromschienen realisiert - und zwar ohne aufwändige Leitungsverbindungen. Die Schleifstücke können über mehrere Schleifkanten auf den Oberseiten der Grundträger der Stromschienen aufliegen und definieren eine vorbestimmte Stromübergangsfläche auch bei temperaturbedingten Stromschienenbewegungen über große Dehnungslängen.

Weiter vorzugsweise ist die Anpresskraft des wenigstens einen Schleifstückes an die Halbschiene über eine Spannschraube einstellbar. Über die Spannschraube kann eine Druckfeder vorgespannt werden, die sich auf dem Schleifstück abstützt und damit dessen Druckkraft auf den Grundsteg der Halbschiene vorgibt. Über die Anpresskraft können die Schleifkontaktbedingungen präzise eingestellt werden, was die Stromübertragungssicherheit zwischen den Stromschienen verbessert.

In einer vorteilhaften Ausgestaltung der erfindungsgemäßen Anordnung ist am Gegenprofil im Bereich des Durchbruches ein das wenigstens eine Schleifstück abdeckendes Gehäuse angeordnet. Das Gehäuse dient einerseits als Schutzabdeckung gegen Schmutz- und äußerer Gewalteinwirkung auf die Strom übertragenden Teile und andererseits als Gegenlager für die Spannschraube bzw. die Druckfeder.

Weitere Eigenschaften und Vorteile der erfindungsgemäßen Dehnverbindungsanordnung ergeben sich aus nachfolgender Beschreibung eines konkreten Ausführungsbeispiels anhand der Zeichnungen, in deren
- FIG 1: eine erfindungsgemäße Anordnung in Seitenansicht,
- FIG 2: die Anordnung aus FIG 1 in Draufsicht,
- FIG 3: ein Querschnitt durch die Anordnung aus FIG 1 längs der Linien III-III,
- FIG 4: ein Querschnitt durch die Anordnung aus FIG 1 längs der Linien IV-IV,
- FIG 5: ein Querschnitt durch die Anordnung aus FIG 1 längs der Linien V-V,
- FIG 6: ein Querschnitt durch die Anordnung aus FIG 1 längs der Linien VI-VI und
- FIG 7: ein Querschnitt durch die Anordnung aus FIG 1 längs der Linien VII-VII,
schematisch veranschaulicht sind.

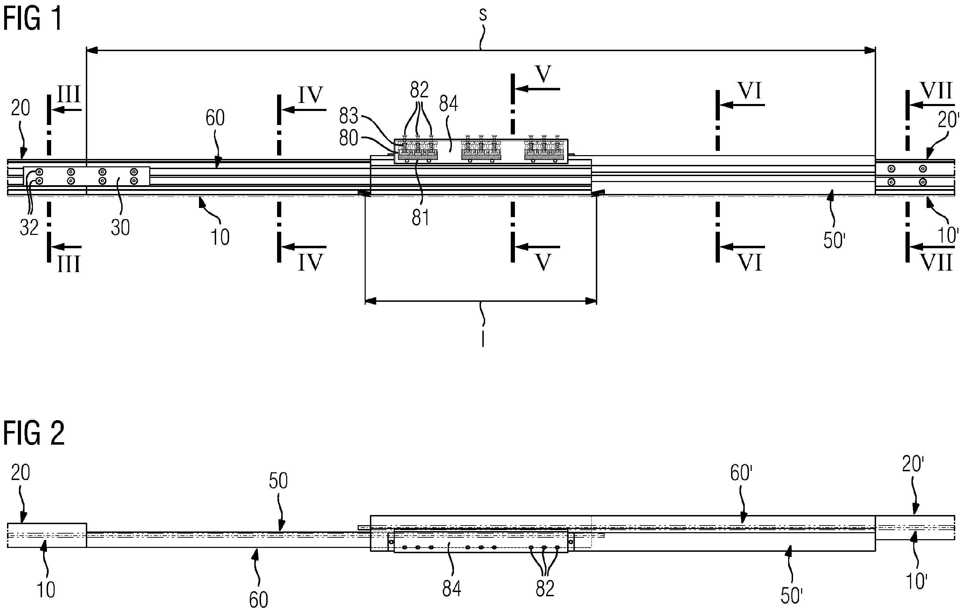

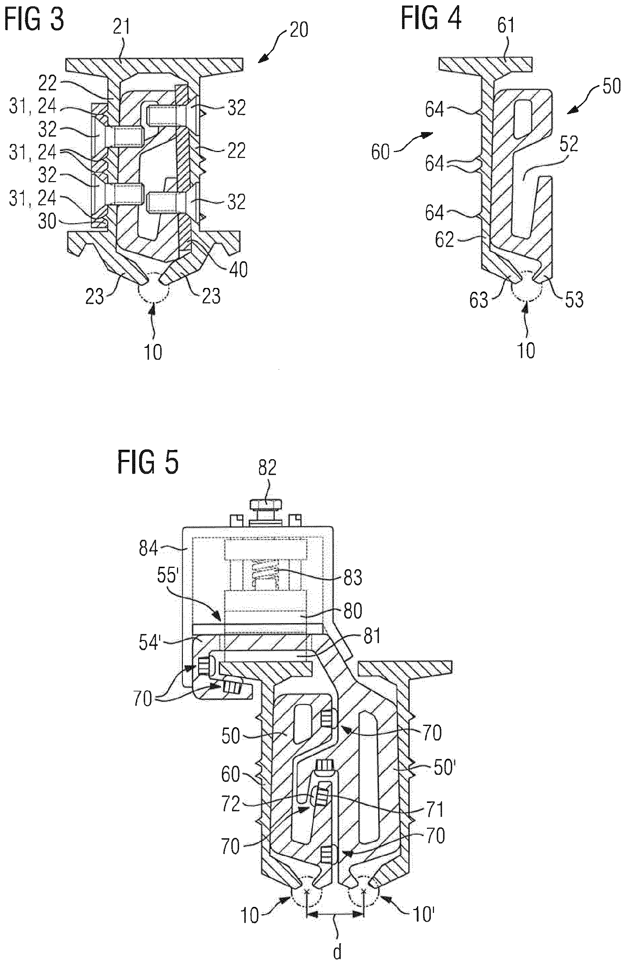

Gemäß FIG 1 und FIG 2 verbindet eine erfindungsgemäße Dehnverbindungsanordnung einer Stromschienen-Oberleitungsanlage eine Stromschiene 20 mit einer an diese anstoßenden Stromschiene 20', die in einem Stoßabstand s von beispielsweise 2700 mm voneinander enden. Die Stromschienen 20 und 20' tragen je einen Fahrdraht 10 bzw. 10', die zur Energieeinspeisung in ein nicht dargestelltes elektrisches Triebfahrzeug durch einen Stromabnehmer des Triebfahrzeuges beschliffen werden. Die Fahrdrähte 10 und 10' erstrecken sich über die Enden der Stromschienen 20 bzw. 20' hinaus bis zum Ende einer Überlappungslänge 1 von beispielsweise 700 mm, auf der sie parallel in einem Fahrdrahtabstand d (vgl. FIG 5) von beispielsweise 27,5 mm gehalten auslaufen. Die Enden der Fahrdrähte 10 bzw. 10' sind leicht nach oben gebogen, um einen glatten Übergang des Stromabnehmers zu ermöglichen. Zwischen den Stromschienen 20 und 20' werden die Fahrdrähte 10 bzw. 10' von einem Verbindungsprofil 50 und einer Halbschiene 60 bzw. von einem Gegenprofil 50' und einer Halbschiene 60 getragen, die mittels Klemmlaschen 30 an der Stromschiene 20 bzw. 20' befestigt sind.

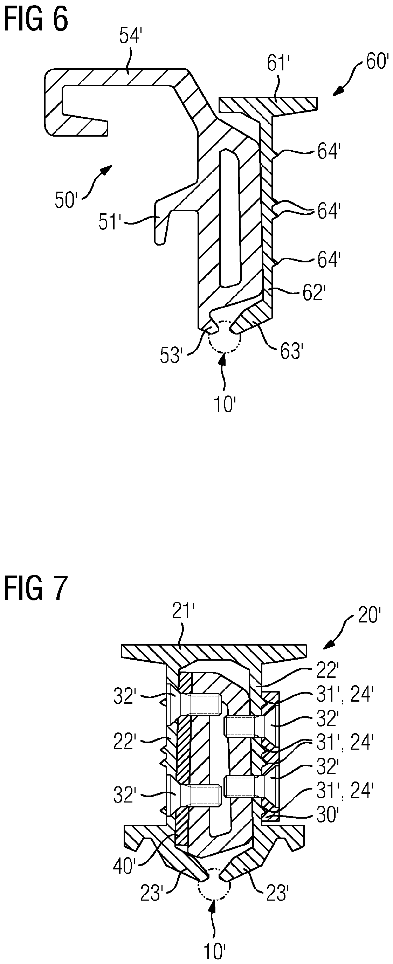

Gemäß FIG 3 und FIG 7 weist die Stromschiene 20 bzw. 20' einen horizontal ausgerichteten Grundträger 21 bzw. 21' auf, von dem aus zwei parallele, vertikal nach unten gerichtete Spannarme 22 bzw. 22' ausgehen. Am freien Ende der Spannarme 22 bzw. 22' sind zangenartig aufeinander zulaufende Klemmarme 23 bzw. 23' angeformt, die in je eine Längskerbe des Fahrdrahtes 10 bzw. 10' eingreifen, um diesen festzuhalten. Zwischen die Spannarme 22 bzw. 22' ist ein Abschnitt des Verbindungsprofils 50 bzw. des Gegenprofils 50' eingeschoben und mittels der an den einen Spannarm 22 bzw. 22' von außen angelegten Klemmlaschen 30 bzw. 30' und an den anderen Spannarm 22 bzw. 22' von innen angelegter Klemmplatten 40 bzw. 40' jeweils durch versenkte Schrauben 32 bzw. 32' daran befestigt. Dabei weisen die Klemmlaschen 30 bzw. 30' Längsrillen 31 bzw. 31' auf, in die korrespondierende Längsstege 24 bzw. 24' an den Außenseiten der Spannarme 22 bzw. 22' eingreifen.

Gemäß FIG 4 und FIG 6 schließt sich an die Stromschiene 20 bzw. 20' je eine Halbschiene 60 bzw. 60' an, die im Querschnitt einer durch eine vertikale Symmetrieebene hälftig längs geteilten Stromschiene 20 bzw. 20' entspricht. Jede Halbschiene 60 bzw. 60' weist daher einen Grundsteg 61 bzw. 61' auf, der halb so breit ist wie der Grundträger 21 bzw. 21' und von dem nur ein Spannarm 62 bzw. 62' nach unten absteht. Am freien Ende des Spannarmes 62 bzw. 62' ist ein Klemmarm 63 bzw. 63' angeformt, der mit einem am Verbindungsprofil 50 bzw. am Gegenprofil 50' angeformten Klemmansatz 53 bzw. 53' den Fahrdraht 10 bzw. 10' über die Länge des Verbindungs- bzw. Gegenprofils 50 bzw. 50' trägt. An der Außenseite des Spannarmes 62 bzw. 62' sind ebenfalls Längsstege 64 bzw. 64' für die Klemmlaschen 30 bzw. 30' angeordnet. Das Verbindungsprofil 50 ist als Hohlprofil ausgebildet, welches eine winkelförmige Ausnehmung 52 aufweist. Demgegenüber weist das Gegenprofil 50', welches ebenfalls als Hohlprofil ausgebildet ist, auf seinem aus der Stromschiene 20' herausragendem Abschnitt eine winkelförmige Anformung 51' sowie einen doppelt gewinkelten Tragarm 54' auf.

Gemäß FIG 5 greift die Anformung 51' auf der Überlappungslänge 1 formschlüssig in die Ausnehmung 52 ein, so dass das Verbindungsprofil 50 und das Gegenprofil 50' zum Ausgleich von Längenänderungen der Stromschienen 20 bzw. 20' in Richtung des Fahrdrahtes 10 bzw. 10' verschiebbar aber quer zur Richtung des Fahrdrahtes 10 bzw. 10' arretiert sind. Hierzu umgreift der Tragarm 54' den Grundsteg 61 der Halbschiene 60 drehfest. Im Spalt zwischen den gegenüberliegenden Außenflächen des Gegenprofils 50' und des Verbindungsprofils 50 und der diesem zugeordneten Halbschiene 60 sind Gleitelemente 70 angeordnet. Ein Gleitelement 70 umfasst einen zweiteiligen Befestigungsschaft 71, mit dem es durch Einpressen oder Einschrauben festgesetzt ist, und einen Rundkopf 72, dessen Höhe die Spaltbreite definiert und der als Gleitfläche dient. Damit werden den Profilen 50 bzw. 50' gute gegenseitige Führungs- und Gleiteigenschaften verliehen.

Gemäß FIG 1, FIG 2 und FIG 5 weist der Tragarm 54' einen rechteckigen Durchbruch 55' auf, der zum Schutz gegen Schmutz und vor Beschädigungen von einem Gehäuse 84 abgedeckt ist. Im Gehäuse 84 sind drei Trägerplatten 80 mit je einem Schleifstück 81 bestückt, welches durch den Durchbruch 55' hindurch die Oberseite des Grundsteges 61 der dem Verbindungsprofil 50 zugeordneten Halbschiene 60 elektrisch kontaktiert. Hierzu weist jedes Schleifstück 81 an seiner Unterseite eine Schleiffläche auf, die einen definierten Kontakt herstellt. Die Anpresskraft wird über je drei Druckfedern 83 erzeugt, die sich an der Oberseite des Gehäuses 84 abstützen und über Spannschrauben 82 vorgespannt werden können. Die Schleifstücke 81 dienen einer einfachen und sicheren Stromübertragung von der einen Stromschiene 20 auf die andere Stromschiene 20'.

Insgesamt wird durch die Verhakung von Verbindungsprofil 50 und Gegenprofil 50' ein optimales Verhältnis zwischen Gewicht und Stabilität der Dehnverbindungsanordnung erreicht. Die Verwendung von Schleifstücken 81 für die Stromübertragung gewährleistet eine hohe Übertragungsrate bei gleichzeitig minimalem Bauvolumen. Es entfallen aufwändige Stromverbinderseile, die den Stoßabstand s überbrücken und deren Wanderwege ausgeglichen werden müssen. Der Bewegungsablauf wird durch die Schleifstücke 81 kaum beeinträchtigt. Geringe Anpresskräfte und Gleitmaterialien können angewendet werden. Die Bauweise ermöglicht den Ausgleich von sehr großen Dehnungslängen und ist in dieser Gestaltung nach oben offen. Je nach Länge der verhakten Profile 50 bzw. 50' kann die erfindungsgemäße Dehnverbindungsanordnung die geforderte Ausgleichslänge kompensieren. Die Profile 50 bzw. 50' sind so gewählt, dass sie jeweils auf beiden Seiten einfach und passend an den normalen Querschnitt der Stromschienen 20 bzw. 20' anschließbar sind. Schließlich kann ein kleinst möglicher Fahrdrahtabstand d beider Stromschienen 20 bzw. 20' realisiert werden. Mit Vorteil werden nur drei verschiedene Querschnitte eingesetzt, da die Halbschiene 60 bzw. 60' doppelt eingesetzt werden kann.

## Patentansprüche

1. Dehnverbindungsanordnung aneinanderstoßender Stromschienen (20, 20') einer Oberleitungsanlage für elektrische Triebfahrzeuge, wobei die zu verbindenden Stromschienen (20, 20') in einem Stoßabstand (s) voneinander beabstandet angeordnet sind und jeweils einen durch einen Stromabnehmer eines Triebfahrzeuges zur Energieübertragung beschleifbaren Fahrdraht (10, 10') tragen,
wobei mit der einen Stromschiene (20) ein Verbindungsprofil (50) und mit der anderen Stromschiene (20') ein Gegenprofil (50') verbunden ist, wobei das Verbindungsprofil (50) und das Gegenprofil (50') derart formschlüssig ineinandergreifen, dass sie in Richtung des Fahrdrahtes (10 bzw. 10') gegeneinander verschiebbar und quer dazu arretiert sind, und wobei jede der Stromschienen (20, 20') jeweils mit einer dieser zugeordneten Halbschiene (60, 60') verbunden ist, welche die Fahrdrähte (10, 10') zwischen den Stromschienen (20, 20') mit dem Verbindungsprofil (50) bzw. dem Gegenprofil (50') tragen und auf einer Überlappungslänge (1) parallel in einem definierten Fahrdrahtabstand (d) zueinander halten.

2. Anordnung nach Anspruch 1, wobei das Verbindungsprofil (50) eine winkelförmige Ausnehmung (52) und das Gegenprofil (50') eine winkelförmige, in die Ausnehmung (52) eingreifende Anformung (51') aufweist.

3. Anordnung nach Anspruch 1 oder 2, wobei das Gegenprofil (50') mit dem Verbindungsprofil (50) und mit der damit verbundenen Halbschiene (60) über Gleitelemente (70) in Gleitkontakt steht.

4. Anordnung nach einem der Ansprüche 1 bis 3, wobei das Gegenprofil (50') einen Tragarm (54') aufweist, der einen Grundsteg (61) der dem Verbindungsprofil (50) zugeordneten Halbschiene (60) drehfest umgreift.

5. Anordnung nach Anspruch 4, wobei der Tragarm (54') einen Durchbruch (55') aufweist, durch den wenigstens ein mit dem Gegenprofil (50') elektrisch leitend verbundenes Schleifstück (81) die mit dem Verbindungsprofil (50) elektrisch leitend verbundene Halbschiene (60) elektrisch kontaktiert.

6. Anordnung nach Anspruch 5, wobei die Anpresskraft des wenigstens einen Schleifstückes (81) an die Halbschiene (60) über eine Spannschraube (82) einstellbar ist.

7. Anordnung nach Anspruch 5 oder 6, wobei am Gegenprofil (50') im Bereich des Durchbruches (55') ein das wenigstens eine Schleifstück (81) abdeckendes Gehäuse (84) angeordnet ist.

## Claims

1. Expansion connection arrangement for adjoining conductor rails (20, 20') of an overhead line system for electric locomotives, wherein the conductor rails (20, 20') to be connected are spaced apart from one another by a joint gap (s) and each support a contact wire (10, 10') along which a locomotive's pantograph can slide in order to transmit energy, wherein a connection profile (50) is connected to one conductor rail (20) and a counterpart profile (50') is connected to the other conductor rail (20'), wherein the connection profile (50) and the counterpart profile (50') intermesh in a form-fit manner such that they can be displaced with respect to one another in the direction of the contact wire (10, 10') and are locked transversely thereto, and wherein each of the conductor rails (20, 20') is connected to a half rail (60, 60') assigned thereto which supports the contact wires (10, 10') between the conductor rails (20, 20') having the connection profile (50) and the counterpart profile (50') respectively and holds them mutually parallel over an overlap length (1) at a defined contact-wire-to-contact-wire distance (d).

2. Arrangement according to claim 1, wherein the connection profile (50) has an angular recess (52) and the counterpart profile (50') an angular moulding (51') engaging in the recess (52).

3. Arrangement according to claim 1 or 2, wherein the counterpart profile (50') is in sliding contact with the connection profile (50) and the thereto connected half rail (60) via sliding elements (70).

4. Arrangement according to one of claims 1 to 3, wherein the counterpart profile (50') has a support arm (54') which engages in a rotationally fixed manner around a base web (61) of the half rail (60) assigned to the connection profile (50).

5. Arrangement according to claim 4, wherein the support arm (54') has an aperture (55') through which at least one contact shoe (81) connected in an electrically conducting manner to the counterpart profile (50') makes electrical contact with the half rail (60) connected in an electrically conducting manner to the connection profile (50).

6. Arrangement according to claim 5, wherein the contact force of the at least one contact shoe (81) can be adjusted to the half rail (60) via a tensioning bolt (82).

7. Arrangement according to claim 5 or 6, wherein a housing (84) covering the at least one contact shoe (81) is disposed on the counterpart profile (50') in the region of the aperture (55').

## Revendications

1. Agencement de joint de dilatation de rails (20, 20') conducteurs bout à bout d'une ligne de contact pour des véhicules de traction électrique, les rails (20, 20') conducteurs à relier étant disposés à une distance (s) d'à coup l'un de l'autre et portant respectivement un fil (10, 10') de contact sur lequel, pour le transport d'énergie, un appareil de prise de courant d'un véhicule de traction peut glisser,
dans lequel au un rail (20) conducteur est relié un profilé (50) de liaison et à l'autre rail (20') conducteur un profilé (50') antagoniste, le profilé (50) de liaison et le profilé (50') antagoniste s'interpénétrant à complémentarité de forme, de manière à pouvoir coulisser l'un par rapport à l'autre dans la direction du fil (10 et 10') de contact et à être bloqués transversalement à cette direction et dans lequel chacun des rails (20, 20') conducteurs est relié respectivement à un demi-rail (60, 60'), qui lui est associé, lesquels portent les fils (10, 10') de contact entre les rails (20, 20') conducteurs ayant le profilé (50) de liaison et le profilé (50') antagoniste et les maintiennent sur une longueur (1) de chevauchement parallèle à une distance (d) de fil de contact définie.

2. Agencement suivant la revendication 1, dans lequel le profilé (50) de liaison a un creux (52) en forme d'équerre et le profilé (50') antagoniste a une conformation (51') en forme d'équerre pénétrant dans le creux (52).

3. Agencement suivant la revendication 1 ou 2, dans lequel le profilé (50') antagoniste est en contact glissant, par des éléments (70) de glissement, avec le profilé (50) de liaison et avec le demi-rail (60), qui y est relié.

4. Agencement suivant l'une des revendications 1 à 3, dans lequel le profilé (50') antagoniste a un bras (54') porteur, qui entoure solidairement en rotation une âme (61) du demi-rail (60) associée au profilé (50) de liaison.

5. Agencement suivant la revendication 4, dans lequel le bras (54') porteur a une traversée (55'), dans laquelle au moins une pièce (81) de glissement, reliée d'une manière conductrice de l'électricité au profilé (50') antagoniste, contacte électriquement le demi-rail (60) relié, d'une manière conductrice de l'électricité, au profilé (50) de liaison.

6. Agencement suivant la revendication 5, dans lequel la force de pression de la au moins une pièce (81) de glissement sur le demi-rail (60) est réglable par une vis (82) de serrage.

7. Agencement suivant la revendication 5 ou 6, dans lequel un boîtier (84), recouvrant la au moins une pièce (81) de glissement, est mis sur le profilé (50') antagoniste dans la région de la traversée (55').
